# EUROPÄISCHE PATENTSCHRIFT

(11) **EP 3 500 824 B1**
(45) Veröffentlichungstag und Bekanntmachung des Hinweises auf die Patenterteilung: **24.11.2021**
(21) Anmeldenummer: 17731132.1
(22) Anmeldetag: 16.06.2017
(51) Int. Cl.: G01C 21/26, G01C 21/30, G08G 1/16, B60T 7/22, B60T 8/1755, G05D 1/02, G06K 9/00, G06K 9/20

(54) **VERFAHREN UND VORRICHTUNG ZUR HINDERNISERKENNUNG DURCH LANDMARKEN**
METHOD AND DEVICE FOR RECOGNISING OBSTACLES USING LANDMARKS
PROCÉDÉ ET DISPOSITIF DE DÉTECTION D'OBSTACLE AU MOYEN DE REPÈRES

(30) Priorität: 18.08.2016 DE 102016215501
(43) Veröffentlichungstag der Anmeldung: 26.06.2019
(73) Patentinhaber: Robert Bosch GmbH, 70442 Stuttgart (DE)
(72) Erfinder: SCHLESER, Roland, 74232 Abstatt (DE)
(86) Internationale Anmeldenummer: PCT/EP2017/064805
(87) Internationale Veröffentlichungsnummer: WO 2018/033274

(56) Entgegenhaltungen:
- DE-A1-102012 006 738
- DE-B3-102014 002 150
- US-A1- 2013 325 241

## Beschreibung

### Stand der Technik

Die Erfindung betrifft ein Verfahren, eine Recheneinheit und ein Fahrzeug zur Hinderniserkennung.

Die Schrift DE 10 2012 006 738 A1 offenbart ein Verfahren zur Kontrolle einer Gruppe von Objekten. Darin ist offenbart, dass eine Vielzahl von Objekten, beispielsweise mehrere Fahrzeuge, die einen Konvoi bilden, Reflektoren aufweisen. Diese Reflektoren sind von einem Detektor eines vorausfahrenden Fahrzeugs detektierbar. Inbesondere bei einer Kurvenfahrt sind die Reflektoren von dem Detektor erkennbar. Sollte ein Reflektor nicht erkannt werden, so wird u.a. auf ein Hindernis geschlossen, so dass entsprechende Maßnahmen zur Vermeidung einer Kollision einzuleiten sind.

Die Schrift DE 10 2014 002 150 B3 offenbart ein Verfahren zur Ermittlung der absoluten Position einer mobilen Einheit und eine mobile Einheit.

Es ist außerdem allgemein bekannt, sogenannte Landmarken zur Lokalisierung eines Fahrzeugs zu verwenden.

Bekannt ist jedoch aus dem Stand der Technik nicht, solche Landmarken auch zur Hinderniserkennung zu verwenden.

### Offenbarung der Erfindung

Um diesem Problem zu begegnen, werden erfindungsgemäß ein Verfahren, eine Recheneinheit, die das Verfahren ausführt und ein die Recheneinheit aufweisendes Fahrzeug zur Hinderniserkennung vorgeschlagen. Das erkannte Hindernis wird zusätzlich bei einem Verfahren und einer das Verfahren ausführenden Recheneinheit bei Steuerung des Bremsverhaltens verwendet. Zusätzlich wird ein System zur Hinderniserkennung vorgeschlagen.

Das Verfahren, sowie die Recheneinheit zur Hinderniserkennung empfangen zunächst eine digitale Karte mit einem hinterlegten Standort wenigstens einer Landmarke und zusätzlichen Standorten von bekannten momentanen und/oder dauerhaft ortsfesten Hindernissen. Die digitale Karte wird von einem Server aus einer Cloud oder von einer internen Speichereinheit empfangen. Bei den Landmarken handelt es sich hierbei um Objekte, welche in der Infrastruktur angeordnet sind und normalerweise zur Orientierung von Fahrzeugen in ihrer Umgebung verwendet werden. Es handelt sich hierbei um Objekte, die von allen Erfassungseinheiten, also beispielsweise Ultraschallsensoren oder Kamerasysteme problemlos erfasst werden können.

Im nächsten Verfahrensschritt wird ein möglicher Erfassungsbereich der wenigstens einen Erfassungseinheit ermittelt. Der mögliche Erfassungsbereich ist hierbei abhängig von auf der digitalen Karte hinterlegten, bekannten momentanen und/oder ortsfesten, die wenigstens eine Landmarke verdeckenden Hindernissen und einer störungsfreien Signalerfassung. Durch den möglichen Erfassungsbereich wird also der Bereich abgedeckt, welcher mittels der Erfassungseinheit überhaupt bezüglich Reichweite technisch möglich ist und durch bekannte Hindernisse innerhalb dieses Bereiches noch einmal eingeschränkt wird.

Im nächsten Verfahrensschritt wird das, sich innerhalb des möglichen Erfassungsbereichs der wenigstens einen Erfassungseinheit befindliche Umfeld in Abhängigkeit des sich in dem Erfassungsbereich befindlichen hinterlegten Standorts der wenigstens einen Landmarke erfasst. So wird sichergestellt, dass erst dann Daten von dem Umfeld der Erfassungseinheit aufgenommen werden, wenn sich die Erfassungseinheit auf einer Position befindet, von der aus sie die erwartete Landkarte erfassen kann. Ein Hindernis wird dann erkannt, falls die Landmarke darauf folgend nicht innerhalb des erfassten, sich innerhalb des möglichen Erfassungsbereichs befindlichen Umfelds erfasst wird. So kann sichergestellt werden, dass auf dem aktuellen Standort bzw. der aktuellen Position der Erfassungseinheit wirklich alle Hindernisse erkannt werden und nicht unentdeckt bleiben. Bestimmte Klassen von Objekten sind nämlich für einige Erfassungseinheiten nicht erfassbar. Beispiele hierfür sind z.B. als Materialien schwarzer Pelz für Lidar und Ultraschallsensoren. Hindernisse mit einer solchen Oberfläche könnten dann übersehen werden. Alternativ wird ein Hindernis erkannt, falls die Landmarke auf einem von dem auf der digitalen Karte hinterlegten Standort abweichenden Standort erfasst wird. So kann sichergestellt werden, dass z.B. auch spiegelnde Hindernisse mittels optischer Erfassungseinheiten erkannt werden, bei welchen Lichtstrahlen reflektiert werden können, sodass auch eine andere ähnliche Landmarke auf einem von dem auf der digitalen Karte hinterlegten Standort abweichenden Standort erfasst werden kann. Dies könnte zu einem Übersehen des Hindernisses führen

Bevorzugt wird ein Hindernis erkannt, falls die räumliche Abweichung des Standorts der erfassten Landmarke von dem auf der digitalen Karte hinterlegten Standort der Landmarke einen ersten Schwellenwert überschreitet. Somit wird beispielsweise die Hinderniserkennung aufgrund eines Messfehlers verhindert.

Vorzugsweise werden auf der digitalen Karte hinterlegte charakterisierende Eigenschaften der wenigstens einen Landmarke empfangen. Ein Hindernis wird darauf folgend erkannt, falls die Landmarke mit den charakterisierenden Eigenschaften nicht innerhalb des möglichen Erfassungsbereichs der wenigstens einen Erfassungseinheit befindlichen Umfelds oder auf einem von dem auf der digitalen Karte hinterlegten Standort abweichenden Standort erfasst wird. So sind die Landmarken eindeutig voneinander unterscheidbar und es besteht keine Verwechslungsgefahr einzelner Landmarken untereinander. So können die charakterisierenden Eigenschaften beispielsweise unterschiedliche Barcodes der wenigstens einen Landmarke oder speziell geformte Geometrien der wenigstens einen Landmarken repräsentieren.

Vorzugsweise ist die wenigstens eine Landmarke statisch. Hierdurch wird der Rechenaufwand für das Verfahren minimiert, da nicht ständig neue Standorte der wenigstens einen Landmarke auf der digitalen Karte hinterlegt werden müssen.

Vorzugsweise sind wenigstens zwei Landmarken vorhanden, wobei die wenigstens zwei Landmarken in einem von den kleinsten zur Erfassung vorgesehenen Hindernissen abhängigen horizontalen Abstand angeordnet sind. Hierdurch ist gewährleistet, dass relevante Objekte, insbesondere Personen mit hoher Wahrscheinlichkeit mindestens eine Landmarke verdecken und somit als Hindernis erkannt werden.

Bevorzugt dient das Verfahren zur Hinderniserkennung für ein Fahrzeug. Fahrzeuge stellen mit ihrer oft hohen Geschwindigkeit und ihrer großen Masse eine große Gefahr für nicht erkannte Hindernisse, wie auch bei Kollision mit dem Hindernis für sich selbst dar.

Das mittels des Verfahrens erkannte Hindernis wird in einem Verfahren bei Steuerung des Bremsverhaltens eines Fahrzeugs verwendet. Hierbei wird eine Bremskraft des Fahrzeugs in Abhängigkeit einer Hinderniserkennung erzeugt. Somit wird sichergestellt, dass auch auf eine Hinderniserkennung entsprechend mit einer Bremsung reagiert wird und eine Kollision mit dem Hindernis verhindert werden kann.

Die Erfindung umfasst zudem ein Fahrzeug, welches wenigstens eine Erfassungseinheit, eine Recheneinheit und eine Ausgabeeinheit umfasst. Die wenigstens eine Erfassungseinheit, welche insbesondere eine Kamera und/oder Abstandssensor repräsentiert, ist zur Erfassung eines sich innerhalb eines Erfassungsbereichs der Erfassungseinheit befindlichen Umfelds ausgebildet. Die Ausgabeeinheit dient zur Ausgabe einer Information über die Hinderniserkennung. Die Ausgabeeinheit ist zur Ausgabe einer Information über die Hinderniserkennung ausgebildet. Die Recheneinheit führt das zuvor beschriebene Verfahren zur Hinderniserkennung und zur Steuerung des Bremsverhaltens eines Fahrzeugs aus. Das Fahrzeug besitzt vorzugsweise wenigstens eine Bremse. Nach einem weiteren Aspekt umfasst die Erfindung ein System zur Hinderniserkennung. Dieses System umfasst wenigstens eine Recheneinheit, wenigstens eine Erfassungseinheit und wenigstens eine in einer Infrastruktur angeordnete Landmarke. Die Landmarke dient hierbei zur Hinderniserkennung und ist vorzugsweise ist der Infrastruktur eines Parkhauses angeordnet. In einem Parkhaus sind die Landmarken besonders einfach in der Infrastruktur anzuordnen und dort besteht durch Fußgänger oft besonders großer Bedarf an Hinderniserkennung.

Vorzugsweise ist die wenigstens eine Landmarke statisch. Hierdurch wird der Rechenaufwand für das Verfahren minimiert, da nicht ständig neue Standorte der wenigstens einen Landmarke auf der digitalen Karte hinterlegt werden müssen.

Kurze Beschreibung der Zeichnungen
Figur 1 zeigt eine Ausführungsform der erfindungsgemäßen Recheneinheit.
Figur 2 zeigt einen Verfahrensablauf gemäß verschiedener Ausführungsformen der Erfindung zur Hinderniserkennung und zur Verwendung des erkannten Hindernisses bei Steuerung des Bremsverhaltens eines Fahrzeugs.
Fig. 3 zeigt schematisch eine Hinderniserkennung eines sich in einem Parkhaus bewegenden Fahrzeugs mittels dort angebrachter Landmarken.

### Ausführungsbeispiele

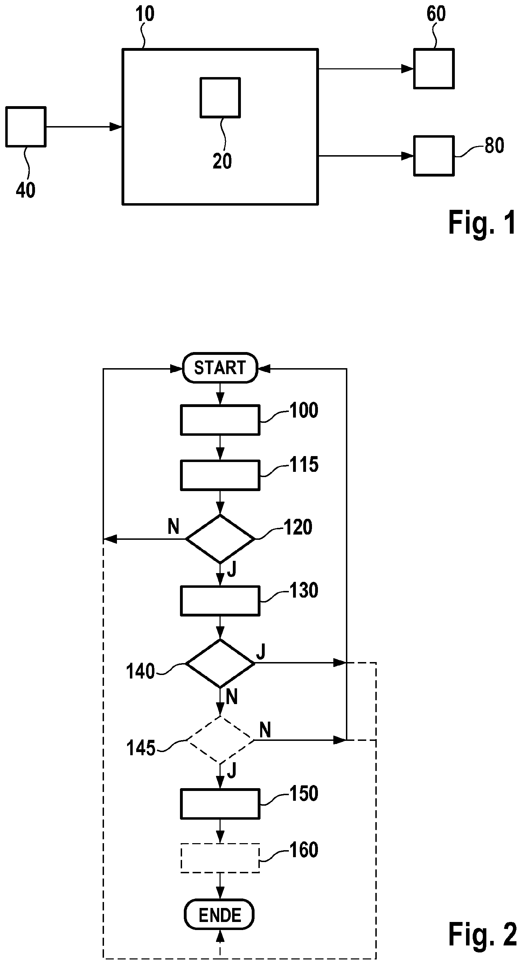

Figur 1 zeigt eine beispielhafte schematische Darstellung der erfindungsgemäßen Recheneinheit 10. Hierbei ist die Recheneinheit 10 dazu eingerichtet, eine digitale Karte mit einem hinterlegten Standort wenigstens einer Landmarke und zusätzlichen Standorten von bekannten momentanen und/oder dauerhaft ortsfesten Hindernissen von einer Speichereinheit 20 zu empfangen. Auf dieser Figur 1 ist die Speichereinheit 20 ein interner Bestandteil der Recheneinheit 10. Alternativ kann sich die Speichereinheit 20 aber auch extern auf beispielsweise einem Server befinden. Die Recheneinheit ist zusätzlich dazu ausgebildet, einen möglichen Erfassungsbereichs der wenigstens einen Erfassungseinheit 40, wobei der mögliche Erfassungsbereich abhängig ist von auf der digitalen Karte hinterlegten, bekannten momentanen und/oder bekannten dauerhaft ortfesten, die wenigstens eine Landmarke verdeckenden Hindernisse und einer störungsfreien Signalerfassung der Erfassungseinheit 40, zu ermitteln. Die Recheneinheit 10 ist weiter dazu ausgebildet, ein sich innerhalb des möglichen Erfassungsbereiches der wenigstens einen Erfassungseinheit 40 befindliches Umfeld in Abhängigkeit des sich in dem Erfassungsbereich befindlichen hinterlegten Standorts der wenigstens einen Landmarke von der Erfassungseinheit 40 zu erfassen. Die Recheneinheit 10 ist weiter dazu ausgebildet, ein Hindernis zu erkennen, falls die wenigstens eine Landmarke nicht innerhalb des möglichen Erfassungsbereichs der wenigstens einen Erfassungseinheit 40 befindlichen Umfelds und/oder auf einem von dem auf der digitalen Karte hinterlegten Standort abweichenden Standort erfasst wird. Optional übermittelt die Recheneinheit 10 eine Information über die Hinderniserkennung an eine Ausgabeeinheit 60 weiter, die die Information beispielsweise über einen Display an den Fahrer des Fahrzeugs ausgibt.

Optional steuert die Recheneinheit 10 eine Bremse 80 zur Erzeugung einer Bremskraft in Abhängigkeit einer Hinderniserkennung

Die Recheneinheit 10 führt die in der Figur 2 dargestellten Ausführungsbeispiele eines erfindungsgemäßen Verfahrens aus.

In dem ersten Ausführungsbeispiel gemäß Figur 2 wird das Verfahren gestartet und in einem sich daran anschließenden ersten Verfahrensschritt 100 eine digitale Karte mit einem hinterlegten Standort wenigstens einer Landmarke undzusätzlichen Standorten von bekannten momentanen und/oder dauerhaft ortsfesten Hindernissen empfangen. In einem dem Verfahrensschritt 100 folgenden Verfahrensschritt 115 wird ein möglicher Erfassungsbereich der wenigstens einen Erfassungseinheit, wobei der mögliche Erfassungsbereich abhängig ist von auf der digitalen Karte hinterlegten, bekannten momentanen und/oder bekannten dauerhaft ortfesten, die wenigstens eine Landmarke verdeckende Hindernisse und einer störungsfreien Signalerfassung der Erfassungseinheit, ermittelt. Es wird also aus den Daten, welche man von der digitalen Karte erhalten hat, der Erfassungsbereich ermittelt, welcher mittels der Erfassungseinheit überhaupt bezüglich Reichweite technisch möglich ist und durch bekannte Hindernisse innerhalb dieses Bereiches noch einmal eingeschränkt wird. In dem darauf folgenden Verfahrensschritt 120 kommt es zur Überprüfung, ob sich der auf der digitalen Karte hinterlegte Standort der wenigstens einen Landmarke in dem möglichen Erfassungsbereich der Erfassungseinheit befindet. Befindet sich der hinterlegte Standort der Landmarke in dem Erfassungsbereich, wird im auf den Verfahrensschritt 120 folgenden Verfahrensschritt 130 das sich innerhalb des möglichen Erfassungsbereichs der wenigstens einen Erfassungseinheit befindliche Umfeld erfasst. Befindet sich der hinterlegte Standort der Landmarke nicht in dem möglichen Erfassungsbereich der Erfassungseinheit, beginnt das Verfahren wieder von vorne oder wird alternativ beendet. In dem auf Verfahrensschritt 130 folgenden Verfahrensschritt 140 wird überprüft, ob es zu einer Übereinstimmung des hinterlegten Standorts der Landmarke und des Standorts der erfassten Landmarke kommt. Falls die Landmarke nicht innerhalb des möglichen Erfassungsbereichs der wenigstens einen Erfassungseinheit befindlichen Umfelds erfasst wird, wird im auf den Verfahrensschritt 140 folgenden Verfahrensschritt 150 ein Hindernis erkannt. Mit anderen Worten wurde die Landmarke also nicht innerhalb des erfassten Umfelds detektiert, da es wahrscheinlich zu einer Verdeckung der Landmarke durch ein Hindernis gekommen ist. Im Anschluss an Verfahrensschritt 150 wird das Verfahren beendet. Falls es in Verfahrensschritt 140 zu einer Übereinstimmung des hinterlegten Standorts der Landmarke und des Standorts der erfassten Landmarke kommt, wird das Verfahren von Neuem gestartet oder alternativ beendet.

In einem zweiten Ausführungsbeispiel wird das Hindernis erkannt, falls in Prüfschritt 140 festgestellt wird, dass die Landmarke auf einem von dem auf der digitalen Karte hinterlegten Standort abweichenden Standort erfasst wird. Hierzu kann es beispielsweise bei Hindernissen mit einer Oberfläche kommen, welche Lichtstrahlen reflektiert. Dann kann es wiederum dazu kommen, dass eine andere Landmarke angezeigt wird, als die zu erwartende Landmarke. Im Anschluss an Verfahrensschritt 150 wird das Verfahren beendet. Falls es in Verfahrensschritt 140 zu einer Übereinstimmung des hinterlegten Standorts der Landmarke und des Standorts der erfassten Landmarke kommt, wird das Verfahren von Neuem gestartet oder alternativ beendet.

In einem dritten Ausführungsbeispiel werden im Verfahrensschritt 100 zusätzlich auf der digitalen Karte hinterlegte charakterisierende Eigenschaften der wenigstens eine Landmarke empfangen. Die nächsten Verfahrensschritte sind hierbei analog zu den Verfahrensschritten im ersten und zweiten Ausführungsbeispiel. Im Verfahrensschritt 140 wird wieder überprüft, ob es zu einer Übereinstimmung des hinterlegten Standorts der Landmarke mit den charakterisierenden Eigenschaften und des Standorts der erfassten Landmarke kommt. Somit können Verwechslungen aufgrund von beispielsweise Messfehlern verhindert werden. Die folgenden Verfahrensschritte sind wieder analog zu den Verfahrensschritten im ersten und im zweiten Ausführungsbeispiel.

In einem vierten Ausführungsbeispiel sind die Verfahrensschritte analog zu den Verfahrensschritten aus dem zweiten und dritten Ausführungsbeispiel. Im Unterschied zu diesen Ausführungsbeispiel wird hier im Verfahrensschritt 145 überprüft, ob die räumliche Abweichung des abweichenden Standorts der Landmarke und des auf der digitalen Karte hinterlegten Standorts einen Schwellenwert überschreitet. Überschreitet diese räumliche Abweichung den Schwellenwert, folgt wiederum Verfahrensschritt 150 analog zu dem zweiten und dritten Ausführungsbeispiel.

In einem fünften Ausführungsbeispiel werden die zuvor beschriebenen Verfahrensschritte ausgeführt. Im Unterschied zu den vorherigen Ausführungsbeispielen sind hierbei wenigstens zwei Landmarken vorhanden, wobei die wenigstens zwei Landmarken in einem von den kleinsten zur Erfassung vorgesehenen Hindernissen abhängigen Abstand angeordnet sind. Dementsprechend ist in diesem Ausführungsbeispiel in Verfahrensschritt 140 nun zu überprüfen, ob die hinterlegten Standorte dieser wenigstens zwei Landmarken mit den Standorten der wenigstens zwei erfassten Landmarken übereinstimmen.

In einem sechsten Ausführungsbeispiel werden die zuvor beschriebenen Verfahrensschritte ausgeführt. Zusätzlich wird hierbei im auf den Verfahrensschritt 150 folgenden Verfahrensschritt 160 ein erkanntes Hindernis bei Steuerung des Bremsverhaltens eines Fahrzeugs verwendet. Hierzu wird im Verfahrensschritt 160 eine Bremskraft des Fahrzeugs in Abhängigkeit einer Hinderniserkennung erzeugt.

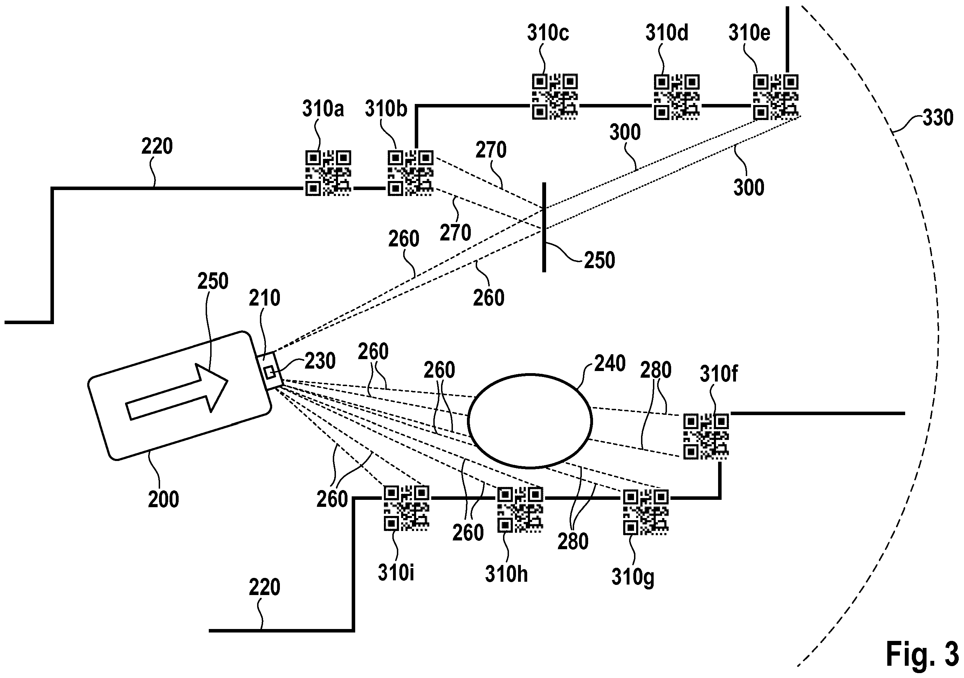

Figur 3 zeigt schematisch ein Fahrzeug 200, welches sich in einem Parkhaus bewegt und an dem eine Erfassungseinheit 210 angebracht ist, in die wiederum eine Recheneinheit integriert ist. In diesem Ausführungsbeispiel handelt es sich bei der Erfassungseinheit 210 um eine optische Erfassungseinheit, insbesondere eine Kamera, welche einfallende Lichtstrahlen 260 erfasst. Der mögliche Erfassungsbereich der optischen Erfassungseinheit wird hierbei durch die technisch mögliche Reichweite 330 der Erfassungseinheit, in der noch eine störungsfreie Signalerfassung möglich ist, und die momentanen und/oder bekannten dauerhaft ortsfesten Hindernisse, wie beispielsweise die Parkhauswand 220 begrenzt. In Bewegungsrichtung 250 des Fahrzeugs befinden sich innerhalb des möglichen Erfassungsbereichs der Erfassungseinheit 210 ein spiegelndes Hindernis 290 und ein weiteres Hindernis 240. An der Parkhauswand 220 sind verschiedene Landmarken 310a, 310b, 310c, 310d, 310e, 310g, 310h und 310i angebracht, welche sich ebenfalls innerhalb des möglichen Erfassungsbereichs der Erfassungseinheit 210 befinden. Damit die Landmarken 310a, 310b, 310c, 310d , 310e, 310g, 310h und 310i eindeutig voneinander zu unterscheiden sind, weisen die Landmarken 310a, 310b, 310c, 310d , 310e, 310g, 310h und 310i in diesem Ausführungsbeispiel QR-Codes auf, welche beispielsweise von einer optischen Erfassungseinheit erfasst werden können. Der horizontale Abstand der Landmarken 310a, 310b, 310c, 310d , 310e, 310g, 310h und 310i sind in diesem Ausführungsbeispiel so gewählt, dass Personen, also die kleinsten zur Erfassung vorgesehenen Hindernisse, noch als Hindernisse erfasst werden können. Die Landmarken 310a, 310b, 310c, 310d , 310e, 310g, 310h und 310i werden von der Erfassungseinheit 210 erfasst und die Recheneinheit 230 überprüft, ob es zu einer Übereinstimmung des hinterlegten Standorts der Landmarken 310a, 310b, 310c, 310d , 310e, 310g, 310h und 310i und der Standorte der erfassten Landmarken 310a, 310b, 310c, 310d , 310e, 310g, 310h und 310i kommt. In diesem Ausführungsbeispiel werden die Lichtstrahlen 270 an dem spiegelnden Hindernis 290 reflektiert und es wird eine Landmarke 310b auf einem Standort erfasst, welcher einer räumlichen Abweichung zu dem normalerweise in dieser Erfassungsrichtung vorgesehenen hinterlegten Standort der Landmarke 310e entspricht. Zusätzlich zu der räumlichen Abweichung können in diesem Ausführungsbeispiel die Landmarken durch ihre charakteristischen QR-Codes voneinander unterschieden werden und so das spiegelnde Hindernis 290 erfasst werden. Das weitere Hindernis 240, welches beispielsweise einer Person entsprechen kann, wird ebenfalls erkannt, da die auf einer digitalen Karte hinterlegten Standorte der Landmarken 310f und 310 g nicht innerhalb des möglichen Erfassungsbereichs der Erfassungseinheit 210 erfasst werden können. Das weitere Hindernis 240 verdeckt die Landmarken 310f und 310g so, dass die Lichtstrahlen 280 nicht von der Erfassungseinheit 210 erfasst werden können.

## Patentansprüche

1. Verfahren zur Hinderniserkennung, wobei das Verfahren die folgenden Verfahrensschritte umfasst:
- Empfangen (110) einer digitalen Karte mit einem hinterlegten Standort wenigstens einer Landmarke (310a, 310b, 310c, 310d , 310e, 310g, 310h, 310i) und zusätzlichen Standorten von bekannten momentanen und/oder dauerhaft ortsfesten Hindernissen, wobei die digitale Karte von einem Server aus einer Cloud oder von einer internen Speichereinheit empfangen wird, und
- Ermitteln (115) eines möglichen Erfassungsbereichs wenigstens einer Erfassungseinheit (40, 210), wobei der mögliche Erfassungsbereich abhängig ist von auf der digitalen Karte hinterlegten, bekannten momentanen und/oder bekannten dauerhaft ortfesten, die wenigstens eine Landmarke(310a, 310b, 310c, 310d , 310e, 310g, 310h, 310i) verdeckende Hindernisse und einer störungsfreien Signalerfassung der Erfassungseinheit (40, 210), wobei der Erfassungsbereich der Erfassungseinheit (40, 210) eine technische Reichweite aufweist und durch die bekannten Hindernisse eingeschränkt ist, und
- Erfassung (130) des sich innerhalb des möglichen Erfassungsbereichs der wenigstens einen Erfassungseinheit (40, 210) befindlichen Umfelds in Abhängigkeit des sich in dem möglichen Erfassungsbereich befindlichen hinterlegten Standorts der wenigstens einen Landmarke (310a, 310b, 310c, 310d , 310e, 310g, 310h, 310i), und
- Erkennung eines Hindernisses, falls die Landmarke (310a, 310b, 310c, 310d , 310e, 310g, 310h, 310i) nicht innerhalb des erfassten, sich innerhalb des möglichen Erfassungsbereichs befindlichen Umfelds oder auf einem von dem auf der digitalen Karte hinterlegten Standort abweichenden Standort erfasst (140) wird.

2. Verfahren nach Anspruch 1, **dadurch gekennzeichnet, dass** das Verfahren die folgenden zusätzlichen Schritte umfasst:
- Erkennung (150) eines Hindernisses (240, 290), falls die räumliche Abweichung des abweichenden Standorts der erfassten Landmarke (310a, 310b, 310c, 310d , 310e, 310g, 310h, 310i) und des auf der digitalen Karte hinterlegten Standorts der Landmarke (310a, 310b, 310c, 310d , 310e, 310g, 310h, 310i) einen Schwellenwert überschreitet (145).

3. Verfahren nach Anspruch 1 oder 2, **dadurch gekennzeichnet, dass** das Verfahren die folgenden zusätzlichen Schritte umfasst:
- Empfangen (100) von auf der digitalen Karte hinterlegten charakterisierenden Eigenschaften der wenigstens einen Landmarke (310a, 310b, 310c, 310d , 310e, 310g, 310h, 310i), und
- Erkennung (150) eines Hindernisses, falls die Landmarke (310a, 310b, 310c, 310d , 310e, 310g, 310h, 310i) nicht innerhalb des erfassten, sich innerhalb des möglichen Erfassungsbereichs befindlichen Umfelds oder auf einem von dem auf der digitalen Karte hinterlegten Standort abweichenden Standort erfasst (140) wird.

4. Verfahren nach einem der Ansprüche 1 bis 3, **dadurch gekennzeichnet, dass** wenigstens zwei Landmarken (310a, 310b, 310c, 310d , 310e, 310g, 310h, 310i) vorhanden sind, wobei die wenigstens zwei Landmarken (310a, 310b, 310c, 310d , 310e, 310g, 310h, 310i) in einem von den kleinsten zur Erfassung vorgesehenen Hindernissen abhängigen horizontalen Abstand angeordnet sind.

5. Verfahren nach einem der Ansprüche 1 bis 4, **dadurch gekennzeichnet, dass** das Verfahren zur Hinderniserkennung für ein Fahrzeug (200) dient.

6. Verfahren zur Verwendung eines erkannten Hindernisses (240, 290) nach einem Verfahren nach Anspruch 5 bei Steuerung des Bremsverhaltens eines Fahrzeugs (200), **dadurch gekennzeichnet, dass** das Verfahren die folgenden zusätzlichen Schritte umfasst:
- Erzeugung (160) einer Bremskraft des Fahrzeugs (200) in Abhängigkeit einer Hinderniserkennung.

7. Recheneinheit (10, 230) zur Hinderniserkennung nach einem Verfahren nach einem der Ansprüche 1 bis 5, **dadurch gekennzeichnet, dass** die Recheneinheit (10, 230) dazu ausgebildet ist,
- eine digitale Karte mit einem hinterlegten Standort wenigstens einer Landmarke (310a, 310b, 310c, 310d , 310e, 310g, 310h, 310i) und Z zusätzlichen Standorten von bekannten momentanen und/oder dauerhaft ortsfesten Hindernissen, wobei die digitale Karte von einem Server aus einer Cloud oder von einer internen Speichereinheit empfangen wird, und
- einen möglichen Erfassungsbereichs wenigstens einer Erfassungseinheit
(40, 210), wobei der mögliche Erfassungsbereich abhängig ist von auf der digitalen Karte hinterlegten, bekannten momentanen und/oder bekannten dauerhaft ortfesten, die wenigstens eine Landmarke (310a, 310b, 310c, 310d , 310e, 310g, 310h, 310i) verdeckenden Hindernisse und einer störungsfreien Signalerfassung der Erfassungseinheit (40, 210), zu ermitteln, wobei der Erfassungsbereich der Erfassungseinheit (40, 210) eine technische Reichweite aufweist und durch die bekannten Hindernisse eingeschränkt ist, und
- ein sich innerhalb des möglichen Erfassungsbereiches der wenigstens einen Erfassungseinheit (40, 210) befindliches Umfeld in Abhängigkeit des sich in dem Erfassungsbereich befindlichen hinterlegten Standorts der wenigstens einen Landmarke (310a, 310b, 310c, 310d , 310e, 310g, 310h, 310i) zu erfassen, und
- ein Hindernis (240, 290) zu erkennen, falls die Landmarke (310a, 310b, 310c, 310d , 310e, 310g, 310h, 310i) nicht innerhalb des erfassten, sich innerhalb des möglichen Erfassungsbereichs befindlichen Umfelds oder auf einem von dem auf der digitalen Karte hinterlegten Standort abweichenden Standort erfasst wird.

8. Recheneinheit (10, 230) zur Verwendung eines erkannten Hindernisses (240, 290) nach einem Verfahren nach einem der Ansprüche 1 bis 5 bei Steuerung des Bremsverhaltens eines Fahrzeugs (200) nach einem Verfahren nach Anspruch 6, **dadurch gekennzeichnet, dass** die Recheneinheit (10, 230) dazu ausgebildet ist,
- eine Bremskraft zur Bremsung des Fahrzeugs (200) in Abhängigkeit der Hinderniserkennung zu steuern.

9. Fahrzeug (200) wenigstens umfassend
- wenigstens eine Erfassungseinheit (40, 210) zur Erfassung eines sich innerhalb eines Erfassungsbereiches der Erfassungseinheit (40, 210) befindlichen Umfelds, und
- eine Recheneinheit (10, 230) nach Anspruch 7 oder 8, und
- eine Ausgabeeinheit (60) zur Ausgabe einer Information über die Hinderniserkennung.

10. Fahrzeug (200) nach Anspruch 9, zusätzlich umfassend
- wenigstens eine an dem Fahrzeug angeordnete Bremse (200) zum Bremsen des Fahrzeugs (200), wobei die Recheneinheit (10, 230),
- die wenigstens eine Bremse (200) zum Bremsen des Fahrzeugs (200) in Abhängigkeit einer Hinderniserkennung ansteuert.

11. System zur Hinderniserkennung nach einem Verfahren nach einem der Ansprüche 1 bis 5, **dadurch gekennzeichnet, dass** das System wenigstens umfasst,
- eine Recheneinheit (10, 230) nach Anspruch 7, und
- wenigstens eine Erfassungseinheit (40, 210) zur Erfassung eines sich innerhalb eines Erfassungsbereiches der Erfassungseinheit (40, 210) befindlichen Umfelds, und
- wenigstens eine in einer Infrastruktur angeordnete Landmarke (310a, 310b, 310c, 310d , 310e, 310g, 310h, 310i) zur Hinderniserkennung.

12. System nach Anspruch 11, **dadurch gekennzeichnet, dass** die wenigstens eine in der Infrastruktur angeordnete Landmarke (310a, 310b, 310c, 310d , 310e, 310g, 310h, 310i) statisch ist.

13. System nach Anspruch 11 oder 12, **dadurch gekennzeichnet, dass** die Landmarke (310a, 310b, 310c, 310d , 310e, 310g, 310h, 310i) in der Infrastruktur eines Parkhaus angeordnet ist.

## Claims

1. Method for obstacle recognition, the method comprising the following method steps:
- receiving (110) a digital map with a stored location of at least one landmark (310a, 310b, 310c, 310d, 310e, 310g, 310h, 310i) and additional locations of known momentary and/or permanently fixed obstacles, the digital map being received from a server from a cloud or from an internal memory unit, and
- determining (115) a possible detection area of at least one detection unit (40, 210), the possible detection area being dependent on known momentary and/or known permanently fixed obstacles concealing the at least one landmark (310a, 310b, 310c, 310d, 310e, 310g, 310h, 310i) that are stored on the digital map and disturbance-free signal detection by the detection unit (40, 210), the detection area of the detection unit (40, 210) having a technical range and being restricted by the known obstacles, and
- detecting (130) the surrounding area located within the possible detection area of the at least one detection unit (40, 210) in dependence on the stored location of the at least one landmark (310a, 310b, 310c, 310d, 310e, 310g, 310h, 310i) located in the possible detection area, and
- recognising an obstacle if the landmark (310a, 310b, 310c, 310d, 310e, 310g, 310h, 310i) is not detected (140) within the detected surrounding area located within the possible detection area or at a location deviating from the location stored on the digital map.

2. Method according to Claim 1, **characterised in that** the method comprises the following additional steps:
- recognising (150) an obstacle (240, 290) if the spatial deviation of the deviating location of the detected landmark (310a, 310b, 310c, 310d, 310e, 310g, 310h, 310i) and the location of the landmark (310a, 310b, 310c, 310d, 310e, 310g, 310h, 310i) stored on the digital map exceeds a threshold value (145) .

3. Method according to Claim 1 or 2, **characterised in that** the method comprises the following additional steps:
- receiving (100) characteristic properties of the at least one landmark (310a, 310b, 310c, 310d, 310e, 310g, 310h, 310i) stored on the digital map, and
- recognising (150) an obstacle if the landmark (310a, 310b, 310c, 310d, 310e, 310g, 310h, 310i) is not detected (140) within the detected surrounding area located within the possible detection area or at a location deviating from the location stored on the digital map.

4. Method according to one of Claims 1 to 3, **characterised in that** there are at least two landmarks (310a, 310b, 310c, 310d, 310e, 310g, 310h, 310i), the at least two landmarks (310a, 310b, 310c, 310d, 310e, 310g, 310h, 310i) being arranged at a horizontal distance dependent on the smallest obstacles intended to be recognised.

5. Method according to one of Claims 1 to 4, **characterised in that** the method serves for obstacle recognition for a vehicle (200).

6. Method for using a recognised obstacle (240, 290) according to a method according to Claim 5 in controlling the braking behaviour of a vehicle (200), **characterised in that** the method comprises the following additional steps:
- producing (160) a braking force of the vehicle (200) in dependence on recognising an obstacle.

7. Computing unit (10, 230) for obstacle recognition according to a method according to one of Claims 1 to 5, **characterised in that** the computing unit (10, 230) is designed
- a digital map with a stored location of at least one landmark (310a, 310b, 310c, 310d, 310e, 310g, 310h, 310i) and additional locations of known momentary and/or permanently fixed obstacles, the digital map being received from a server from a cloud or from an internal memory unit, and
- to determine a possible detection area of at least one detection unit (40, 210), the possible detection area being dependent on known momentary and/or known permanently fixed obstacles concealing the at least one landmark (310a, 310b, 310c, 310d, 310e, 310g, 310h, 310i) that are stored on the digital map and disturbance-free signal detection by the detection unit (40, 210), the detection area of the detection unit (40, 210) having a technical range and being restricted by the known obstacles, and
- to detect a surrounding area located within the possible detection area of the at least one detection unit (40, 210) in dependence on the stored location of the at least one landmark (310a, 310b, 310c, 310d, 310e, 310g, 310h, 310i) located in the detection area, and
- to recognise an obstacle (240, 290) if the landmark (310a, 310b, 310c, 310d, 310e, 310g, 310h, 310i) is not detected within the detected surrounding area located within the possible detection area or at a location deviating from the location stored on the digital map.

8. Computing unit (10, 230) for using a detected obstacle (240, 290) according to a method according to one of Claims 1 to 5 in controlling the braking behaviour of a vehicle (200) according to a method according to Claim 6, **characterised in that** the computing unit (10, 230) is designed
- to control a braking force for braking the vehicle (200) in dependence on recognising an obstacle.

9. Vehicle (200) at least comprising
- at least one detection unit (40, 210) for detecting a surrounding area within a detection area of the detection unit (40, 210), and
- a computing unit (10, 230) according to Claim 7 or 8, and
- an output unit (60) for outputting information concerning the obstacle recognition.

10. Vehicle (200) according to Claim 9, additionally comprising
- at least one brake (200), arranged on the vehicle, for braking the vehicle (200),
the computing unit (10, 230)
- activating the at least one brake (200) for braking the vehicle (200) in dependence on recognising an obstacle.

11. System for obstacle recognition according to a method according to one of Claims 1 to 5, **characterised in that** the system comprises at least
- a computing unit (10, 230) according to Claim 7, and
- at least one detection unit (40, 210) for detecting a surrounding area within a detection area of the detection unit (40, 210), and
- at least one landmark (310a, 310b, 310c, 310d, 310e, 310g, 310h, 310i) arranged in an infrastructure for obstacle recognition.

12. System according to Claim 11, **characterised in that** the at least one landmark (310a, 310b, 310c, 310d, 310e, 310g, 310h, 310i) arranged in the infrastructure is static.

13. System according to Claim 11 or 12, **characterised in that** the landmark (310a, 310b, 310c, 310d, 310e, 310g, 310h, 310i) is arranged in the infrastructure of a multi-storey car park.

## Revendications

1. Procédé de reconnaissance d'obstacle, le procédé comprenant les étapes de procédé suivantes consistant à :
- recevoir (110) une carte numérique avec un emplacement enregistré d'au moins un repère (310a, 310b, 310c, 310d, 310e, 310g, 310h, 310i) et des emplacements supplémentaires d'obstacles momentanés ou/ou durablement stationnaires connus, la carte numérique étant reçue d'un serveur à partir d'un cloud ou d'une unité de mémoire interne, et
- déterminer (115) une zone de détection possible d'au moins une unité de détection (40, 210), la zone de détection possible dépendant d'obstacles momentanés et/ou durablement stationnaires connus, enregistrés sur la carte numérique, qui masquent au moins un repère (310a, 310b, 310c, 310d, 310e, 310g, 310h, 310i), et d'une détection de signal sans perturbation par l'unité de détection (40, 210), la zone de détection de l'unité de détection (40, 210) présentant une portée technique et étant restreinte par les obstacles connus, et
- détecter (130) l'environnement se trouvant à l'intérieur de la zone de détection possible de ladite au moins une unité de détection (40, 210) en fonction de l'emplacement enregistré, se trouvant dans la zone de détection possible, de l'au moins un repère (310a, 310b, 310c, 310d, 310e, 310g, 310h, 310i), et
- reconnaître un obstacle si le repère (310a, 310b, 310c, 310d, 310e, 310g, 310h, 310i) n'est pas détecté (140) à l'intérieur de l'environnement se trouvant à l'intérieur de la zone de détection possible ou est détecté à un emplacement différent de l'emplacement enregistré sur la carte numérique.

2. Procédé selon la revendication 1, **caractérisé en ce que** le procédé comprend les étapes supplémentaires suivantes consistant à :
- reconnaître (150) un obstacle (240, 290) si la différence spatiale de l'emplacement différent du repère détecté (310a, 310b, 310c, 310d, 310e, 310g, 310h, 310i) et de l'emplacement enregistré sur la carte numérique du repère (310a, 310b, 310c, 310d, 310e, 310g, 310h, 310i) dépasse une valeur seuil (145).

3. Procédé selon la revendication 1 ou 2, **caractérisé en ce que** le procédé comprend les étapes supplémentaires suivantes consistant à :
- recevoir (100) des propriétés caractéristiques, enregistrées sur la carte numérique, de l'au moins un repère (310a, 310b, 310c, 310d, 310e, 310g, 310h, 310i), et
- reconnaître (150) un obstacle si le repère (310a, 310b, 310c, 310d, 310e, 310g, 310h, 310i) n'est pas détecté (140) à l'intérieur de l'environnement détecté qui se trouve à l'intérieur de la zone de détection possible ou est détecté à un emplacement différent de l'emplacement enregistré sur la carte numérique.

4. Procédé selon l'une quelconque des revendications 1 à 3, **caractérisé en ce qu'**au moins deux repères (310a, 310b, 310c, 310d, 310e, 310g, 310h, 310i) sont présents, les au moins deux repères (310a, 310b, 310c, 310d, 310e, 310g, 310h, 310i) étant disposés à une distance horizontale dépendant des plus petits obstacles prévus pour la détection.

5. Procédé selon l'une quelconque des revendications 1 à 4, **caractérisé en ce que** le procédé de reconnaissance d'obstacle est destiné à un véhicule (200) .

6. Procédé d'utilisation d'un obstacle reconnu (240, 290) selon un procédé selon la revendication 5 lors de la commande du comportement de freinage d'un véhicule (200), **caractérisé en ce que** le procédé comprend les étapes supplémentaires suivantes consistant à :
- générer (160) une force de freinage du véhicule (200) en fonction d'une reconnaissance d'obstacle.

7. Unité de calcul (10, 230) pour la reconnaissance d'obstacle selon un procédé selon l'une quelconque des revendications 1 à 5, **caractérisée en ce que** l'unité de calcul (10, 230) est réalisée pour
- une carte numérique avec un emplacement enregistré d'au moins un repère (310a, 310b, 310c, 310d, 310e, 310g, 310h, 310i) et des emplacements supplémentaires d'obstacles momentanés et/ou durablement stationnaires connus, la carte numérique étant reçue d'un serveur à partir d'un cloud ou d'une unité de mémoire interne, et
- déterminer une zone de détection possible d'au moins une unité de détection (40, 210), la zone de détection possible dépendant d'obstacles momentanés et/ou durablement stationnaires connus, enregistrés sur la carte numérique, qui masquent au moins un repère (310a, 310b, 310c, 310d, 310e, 310g, 310h, 310i), et d'une détection de signal sans perturbation par l'unité de détection (40, 210), la zone de détection de l'unité de détection (40, 210) présentant une portée technique et étant restreinte par les obstacles connus, et
- détecter un environnement se trouvant à l'intérieur de la zone de détection possible de ladite au moins une unité de détection (40, 210) en fonction de l'emplacement enregistré se trouvant dans la zone de détection de l'au moins un repère (310a, 310b, 310c, 310d, 310e, 310g, 310h, 310i), et
- reconnaître un obstacle (240, 290) si le repère (310a, 310b, 310c, 310d, 310e, 310g, 310h, 310i) n'est pas détecté à l'intérieur de l'environnement détecté qui se trouve à l'intérieur de la zone de détection possible ou est détecté à un emplacement différent de l'emplacement enregistré sur la carte numérique.

8. Unité de calcul (10, 230) permettant d'utiliser un obstacle reconnu (240, 290) selon un procédé selon l'une quelconque des revendications 1 à 5 lors de la commande du comportement de freinage d'un véhicule (200) selon le procédé selon la revendication 6, **caractérisée en ce que** l'unité de calcul (10, 230) est réalisée pour
- commander une force de freinage pour le freinage du véhicule (200) en fonction de la reconnaissance d'obstacle.

9. Véhicule (200), comprenant au moins
- au moins une unité de détection (40, 210) pour détecter un environnement se trouvant à l'intérieur d'une zone de détection de l'unité de détection (40, 210), et
- une unité de calcul (10, 230) selon la revendication 7 ou 8, et
- une unité de sortie (60) pour sortir une information concernant la reconnaissance d'obstacle.

10. Véhicule (200) selon la revendication 9, comprenant en outre
- au moins un frein (200) disposé sur le véhicule pour freiner le véhicule (200),
l'unité de calcul (10, 230) pilotant
- ledit au moins un frein (200) pour freiner le véhicule (200) en fonction d'une reconnaissance d'obstacle.

11. Système de reconnaissance d'obstacle selon un procédé selon l'une quelconque des revendications 1 à 5, **caractérisé en ce que** le système comprend au moins
- une unité de calcul (10, 230) selon la revendication 7, et
- au moins une unité de détection (40, 210) pour détecter un environnement se trouvant à l'intérieur d'une zone de détection de l'unité de détection (40, 210), et
- au moins un repère (310a, 310b, 310c, 310d, 310e, 310g, 310h, 310i) disposé dans une infrastructure pour la reconnaissance d'obstacle.

12. Système selon la revendication 11, **caractérisé en ce que** ledit au moins un repère (310a, 310b, 310c, 310d, 310e, 310g, 310h, 310i) disposé dans l'infrastructure est statique.

13. Système selon la revendication 11 ou 12, **caractérisé en ce que** le repère (310a, 310b, 310c, 310d, 310e, 310g, 310h, 310i) est disposé dans l'infrastructure d'un parking.
